# EUROPEAN PATENT SPECIFICATION

(11) **EP 3 033 978 B1**
(45) Date of publication and mention of the grant of the patent: **23.11.2016**
(21) Application number: 15196749.4
(22) Date of filing: 27.11.2015
(51) Int. Cl.: A47J 37/12, A47J 37/06, F24C 15/32

(54) **AIR FRYER**
LUFTFRITTEUSE
FRITEUSE À AIR

(30) Priority: 18.12.2014 CN 201410802286
(43) Date of publication of application: 22.06.2016
(73) Proprietor: Yan, Shaoji, Ronggui Sub-district Shunde District Foshan 528303 Guangdong (CN)
(72) Inventor: XIAO, Xueyu, 528300 Foshan Guangdong (CN)
(74) Representative: Cross, James Peter Archibald

(56) References cited:
- WO-A1-2010/034338
- CN-A- 103 767 562

## Description

### Field of Technology

The present invention relates to the field of kitchen appliances and more particularly to an air fryer using electric heating radiation and hot air to bake food.

### Background

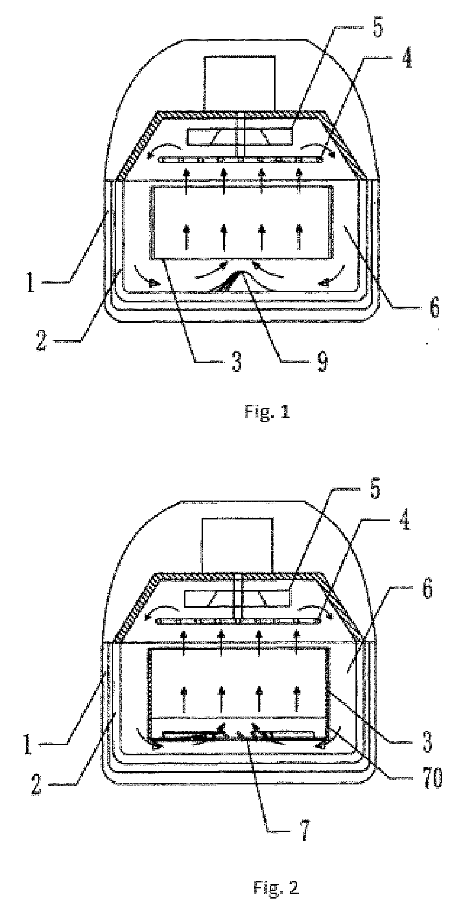

As shown in figure 1, in a known air fryer a raised air guide means is often arranged on the bottom wall of the inner pot. As shown in EP-A-2347186, a pot body 1 has a food baking chamber inside. An inner pot 2 is arranged on the bottom of the food baking chamber within the pot body 1. A fry basket 3 is arranged within the inner pot 2. Above the fry basket 3 an electric heating tube 4 and a fan 5 positioned above the electric heating tube 4 are arranged. A side wall of the fry basket 3 is a flat plate 30, and its base is a grid plate 31. An air flow channel 6 is arranged between the inner pot 2 and the fry basket 3. The center of the bottom of the inner pot has at least one convex-concave air guide means 9 with a complex shape. As a result of this specific configuration of the air fryer the air flow can be guided to converge upwardly making the food in the fry basket to be heated evenly, but the manufacture of the air guide means with a convex-concave shape located in the bottom of the inner pot is very complicated and costs thereof are high; also it is difficult to clean the bottom of the inner pot.

### Summary of the invention

Aspects of the invention are defined by the accompanying claims.

An embodiment of the invention comprises an air fryer, comprising a pot body (1), an inner pot (2), a fry basket (3) arranged within the inner pot (2), an electric heating tube (4) arranged above the fry basket (3), and a fan (5) positioned above the electric heating tube (4), a side wall of the fry basket (3) being a metal sheet, its base being a grid structure, an air flow channel (6) arranged between the inner pot (2) and the fry basket (3), wherein a base plate of a swirling flow guide cylinder is arranged below and outside the bottom of said fry basket (3), which connects to the side wall of the fry basket, the left-handed or right-handed air inlets (8) facing towards the same direction are evenly placed on the base plate (7) of the swirling flow guide cylinder, one side of the air inlets (8) is folded along the direction of the air flow to form deflector blades guiding the air flow deflecting towards the same direction to form a swirling air flow.

Said base plate (7) of the swirling flow guide cylinder connects to the side wall of the fry basket through a connection wall (70).

Said base plate (7) of the swirling flow guide cylinder hermetically connects to the side wall of the fry basket through the connection wall (70), and below the connection wall (70) support pillars (71) are arranged to support on the bottom wall of the inner pot (2).

Another air inlet (72) is arranged at the center of said base plate (7) of the swirling flow guide cylinder.

Because a swirling flow guide cylinder is arranged below the bottom of the fry basket and air inlets are evenly arranged on the base plate of the swirling flow guide cylinder causing air forming a swirling air flow, such a structure does not require a complex air guide means arranged in the inner pot and simplifies the manufacture. The air fryer has a simpler structure and the bottom of the inner pot is easier to be cleaned. The slit air inlets facing towards the same direction and in a swirling radial pattern are evenly arranged in the base plate of the swirling flow guide cylinder, which is beneficial to make air to form a swirling air flow. The air flow which swirls upwardly is more powerful under the coordination of the suction of the fan above it. As a result, the food in the fry basket can be heated evenly by the air flow from bottom up.

Thus, there may be provided an air fryer with a simpler air guide means, that is easy to manufacture and/or of which the bottom of the inner pot is easier to clean.

### Brief description of the drawings

Fig. 1 is a schematic illustration of the known air fryer.
Fig. 2 is a schematic illustration of the air fryer of the first embodiment according to the present invention.
Fig. 3 is a perspective view of the base plate of the swirling flow guide cylinder.
Fig. 4 is a schematic illustration of the air fryer of the second embodiment according to the present invention.

### Description of preferred embodiments

Hereinafter the air fryer of embodiments of the invention will be illustrated while referring to the drawings.

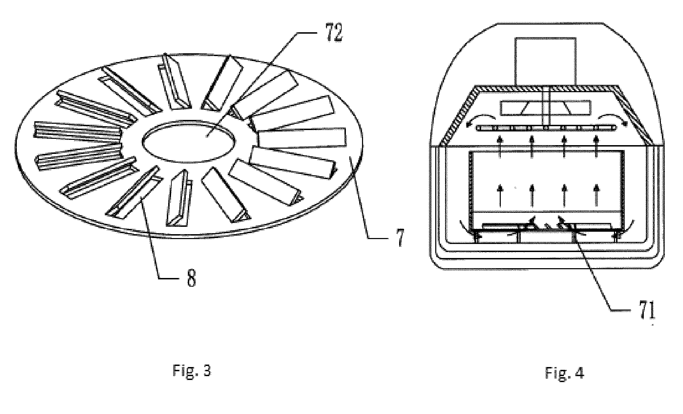

A first embodiment: as shown in figure 2 and figure 3, for the air fryer in this embodiment, a pot body 1 is provided with an inner pot 2 inside for use as a food baking chamber. A fry basket 3 for carrying foods is arranged within the inner pot 2. Above the fry basket 3 an electric heating tube 4 and a fan 5 positioned above the electric heating tube 4 are arranged. A side wall of the fry basket 3 is a metal sheet, and its base is a grid structure. An air flow channel 6 is formed between the inner pot 2 and the fry basket 3. In order to increase the velocity of the hot air flow, below the bottom of the fry basket 3 a swirling flow guide cylinder is arranged which connects to the side wall of the fry basket 3. A base plate 7 of the swirling flow guide cylinder evenly has slit air inlets 8 facing towards the same direction and with a rotationally radial pattern, which causes air to form a rotating or swirling air flow. The air inlets 8 are such that after slits being punched in a metal sheet one side of the sheet are folded along the direction of the air flow to form deflector blades guiding the air flow to swirl or rotate. The total flow passage area of all air inlets in the flow guide cylinder is smaller than that of the air flow channel 6, so the velocity of the air flow through the air inlets increases.

Gaps among the food in the center of the basket are relatively smaller and so it takes a longer time for the food there to become fully cooked. While in this solution, the air flow swirling upwardly towards the grid base of the fry basket 3 can be converged more powerfully under the coordination of the suction of the fan above it. This results in that the food in the fry basket can be heated evenly by the air flow from bottom up. The center of the base plate 7 of the flow guide cylinder additionally has a circular air inlet 72, which can strengthen the flow of the air through the center of the grid base of the fry basket and thus cause the food in the center of the fry basket to be heated more sufficiently. The base plate 7 of the swirling flow guide cylinder may connect to the side wall of the fry basket 3 through a connection wall 70, and is arranged at an appropriate distance from the bottom of the inner pot 2. The bottom of the inner pot 2 does not have any convex-concave shape, but is flat and much easier to be cleaned.

A second embodiment: as shown in figure 4, for the air fryer in this embodiment, its main structure is basically the same as that of the first embodiment. Differences are that the base plate 7 of the swirling flow guide cylinder movably connects to the side wall of the fry basket 3 through the connection wall 70, and below that connection wall 70 support pillars 71 are arranged to support on the bottom wall of the inner pot 2. This structure can improve the stability of the fry basket 3, of which the handle of the fry basket 3 is not required to support the fry basket at one single point in a suspension manner and thus the fry basket 3 is prevented from becoming easily out of shape due to the handle being under uneven stress for supporting the fry basket at one single point in the suspension manner.

A further benefit is that: when the side wall of the swirling flow guide cylinder is appropriately extended upwardly to be movably sleeved with the fry basket 3, the side wall and the bottom wall of the fry basket can be integrally formed. This can significantly reduce the whole weight of the fry basket and make it easier to be taken with less effort.

## Claims

1. An air fryer comprising a pot body (1), an inner pot (2), a fry basket (3) arranged within the inner pot (2), an electric heating tube (4) arranged above the fry basket (3), and a fan (5) positioned above the electric heating tube (4), wherein an air flow channel (6) is arranged between the inner pot (2) and the fry basket (3); **characterized in that** a swirling flow guide cylinder is arranged below the bottom of said fry basket (3), and air inlets (8) are disposed around a base plate (7) of the swirling flow guide cylinder, the air inlets being arranged to deflect the air flow to form a swirling air flow.

2. Air fryer according to claim 1, wherein the air inlets are left-handed or right-handed, facing in the same direction.

3. Air fryer according to claim 1 or claim 2, wherein the air inlets are evenly placed on the base plate (7).

4. Air fryer according to any preceding claim, wherein one side of each of the air inlets (8) is folded along the direction of the air flow to form deflector blades to deflect the air flow.

5. Air fryer according to any preceding claim, wherein the swirling flow guide cylinder is connected to a side wall of the fry basket.

6. Air fryer according to claim 5, wherein said base plate (7) of the swirling flow guide cylinder connects to the side wall of the fry basket through a connection wall (70).

7. Air fryer according to claim 6, wherein said base plate (7) of the swirling flow guide cylinder is hermetically connected to the side wall of the fry basket through the connection wall (70).

8. Air fryer according to claim 6 or claim 7, wherein support pillars (71) are arranged below the connection wall (70) to support a bottom wall of the inner pot (2).

9. Air fryer according to any one of claims 5 to 8, wherein the side wall of the fry basket (3) comprises metal sheet.

10. Air fryer according to any preceding claim, wherein another air inlet (72) is arranged at the center of said base plate (7) of the swirling flow guide cylinder.

11. Air fryer according to any preceding claim, wherein a base of the fry basket (3) has a grid structure.

## Patentansprüche

1. Heißluft-Fritteuse, umfassend einen Topfkörper (1), einen inneren Topf (2), einen in dem inneren Topf (2) angeordneten Frittierkorb (3), eine über dem Frittierkorb (3) angeordnete elektrische Heizröhre (4) und ein über der elektrischen Heizröhre (4) positioniertes Gebläse (5), wobei ein Luftströmungskanal (6) zwischen dem inneren Topf (2) und dem Frittierkorb (3) angeordnet ist; **dadurch gekennzeichnet, dass** ein Wirbelströmungs-Leitzylinder unter dem Boden des Frittierkorbs (3) angeordnet ist und Lufteinlässe (8) um eine Bodenplatte (7) des Wirbelströmungs-Leitzylinders herum angeordnet sind, wobei die Lufteinlässe dazu angeordnet sind, die Luftströmung umzulenken, um eine verwirbelte Luftströmung zu bilden.

2. Heißluft-Fritteuse nach Anspruch 1, wobei die Lufteinlässe nach links weisen oder nach rechts weisen und in dieselbe Richtung weisen.

3. Heißluft-Fritteuse nach Anspruch 1 oder Anspruch 2, wobei die Lufteinlässe gleichmäßig an der Bodenplatte (7) platziert sind.

4. Heißluft-Fritteuse nach einem der vorangehenden Ansprüche, wobei eine Seite von jedem der Lufteinlässe (8) entlang der Richtung der Luftströmung abgekantet ist, um Umlenklamellen zu bilden, um die Luftströmung umzulenken.

5. Heißluft-Fritteuse nach einem der vorangehenden Ansprüche, wobei der Wirbelströmungs-Leitzylinder mit einer Seitenwand des Frittierkorbs verbunden ist.

6. Heißluft-Fritteuse nach Anspruch 5, wobei die Bodenplatte (7) des Wirbelströmungs-Leitzylinders über eine Verbindungswand (70) mit der Seitenwand des Frittierkorbs in Verbindung tritt.

7. Heißluft-Fritteuse nach Anspruch 6, wobei die Bodenplatte (7) des Wirbelströmungs-Leitzylinders über die Verbindungswand (70) luftdicht mit der Seitenwand des Frittierkorbs verbunden ist.

8. Heißluft-Fritteuse nach Anspruch 6 oder Anspruch 7, wobei Stützsäulen (71) unter der Verbindungswand (70) angeordnet sind, um eine Bodenwand des inneren Topfes (2) zu stützen.

9. Heißluft-Fritteuse nach einem der Ansprüche 5 bis 8, wobei die Seitenwand des Frittierkorbs (3) Metallblech umfasst.

10. Heißluft-Fritteuse nach einem der vorangehenden Ansprüche, wobei ein weiterer Lufteinlass (72) in der Mitte der Bodenplatte (7) des Wirbelströmungs-Leitzylinders angeordnet ist.

11. Heißluft-Fritteuse nach einem der vorangehenden Ansprüche wobei ein Boden des Frittierkorbs (3) eine Gitterstruktur aufweist.

## Revendications

1. Friteuse à air comprenant un corps de cuve (1), une cuve interne (2), un panier à frire (3) disposé à l'intérieur de la cuve interne (2), un tube électrique chauffant (4) disposé au dessus du panier à frire (3), et un ventilateur (5) placé au-dessus du tube électrique chauffant (4), dans laquelle un canal de flux d'air (6) est agencé entre la cuve interne (2) et le panier à frire (3) ; **caractérisée en ce qu'**un cylindre de guidage de flux tourbillonnant est disposé en-dessous du fond dudit panier à frire (3), et des entrées d'air (8) sont disposées autour d'une plaque de base (7) du cylindre de guidage de flux tourbillonnant, les entrées d'air étant agencées pour dévier le flux d'air afin de former un flux d'air tourbillonnant.

2. Friteuse à air selon la revendication 1, dans laquelle les entrées d'air sont orientées vers la gauche ou orientées vers la droite, dans le même sens.

3. Friteuse à air selon la revendication 1 ou la revendication 2, dans laquelle les entrées d'air sont placées de manière équidistante sur la plaque de base (7).

4. Friteuse à air selon l'une quelconque des revendications précédentes, dans laquelle un côté de chacune des entrées d'air (8) est plié dans la direction du flux d'air afin de former des lames déflectrices servant à dévier le flux d'air.

5. Friteuse à air selon l'une quelconque des revendications précédentes, dans laquelle le cylindre de guidage de flux tourbillonnant est connecté à une paroi latérale du panier à frire.

6. Friteuse à air selon la revendication 5, dans laquelle ladite plaque de base (7) du cylindre de guidage de flux tourbillonnant se connecte à la paroi latérale du panier à frire par le biais d'une paroi de connexion (70).

7. Friteuse à air selon la revendication 6, dans laquelle ladite plaque de base (7) du cylindre de guidage de flux tourbillonnant est connectée hermétiquement à la paroi latérale du panier à frire par le biais de la paroi de connexion (70).

8. Friteuse à air selon la revendication 6 ou la revendication 7, dans laquelle des montants de support (71) sont agencés en dessous de la paroi de connexion (70) pour supporter une paroi inférieure de la cuve interne (2).

9. Friteuse à air selon l'une quelconque des revendications 5 à 8, dans laquelle la paroi latérale du panier à frire (3) comprend une feuille métallique.

10. Friteuse à air selon l'une quelconque des revendications précédentes, dans laquelle une autre entrée d'air (72) est agencée au centre de ladite plaque de base (7) du cylindre de guidage de flux tourbillonnant.

11. Friteuse à air selon l'une quelconque des revendications précédentes, dans laquelle une base du panier à frire (3) comporte une structure de grille.
